# FASCICULE DE BREVET EUROPEEN

(11) **EP 0 671 132 B1**
(45) Date de publication et mention de la délivrance du brevet: **08.07.1998**
(21) Numéro de dépôt: 95400490.9
(22) Date de dépôt: 07.03.1995
(51) Int. Cl.: A42B 3/04, G02B 27/00

(54) **Equipement de tête à liaison isostatique entre coque et équipements optroniques**
Auf dem Kopf zu tragende Ausrüstung mit isostatischer Verbindung zwischen Helmschale und optoelektronischen Instrumenten
Head equipment with isostatic connection between helmet shell and optoelectronic instruments

(30) Priorité: 11.03.1994 FR 9402862
(43) Date de publication de la demande: 13.09.1995
(73) Titulaire: SEXTANT AVIONIQUE, 92360 Meudon-la-Forêt (FR)
(72) Inventeur: Baudou, Joel, F-92402 Courbevoie Cédex (FR); Vitte, Vincent, F-92402 Courbevoie Cédex (FR)
(74) Mandataire: Simonnet, Christine

(56) Documents cités:
- EP-A- 0 290 293
- EP-A- 0 475 679
- EP-A- 0 576 160
- FR-A- 2 677 604
- GB-A- 2 254 160

## Description

L'invention se situe dans le domaine des casques équipés de moyens optiques de visualisation, par exemple les casques pour pilote d'avions militaires.

De tels casques comportent une coque destinée à la protection contre la perforation. La coque est équipée d'un habillage interne destiné à la protection de la tête du pilote contre les chocs. Ils comportent aussi un dispositif de visualisation. Ces dispositifs ont pour fonction de présenter au pilote des informations sous forme symbolique. Ces informations se superposent sous forme virtuelle au paysage extérieur. Lorsque ces informations représentent des éléments masqués ou non encore visibles du paysage extérieur elles doivent être présentées dans la direction réelle où elles se trouvent par rapport à un référentiel lié à la terre. Pour cette raison et pour des raisons de netteté de l'image les divers composants du dispositif de visualisation doivent garder entre eux et par rapport à l'oeil du pilote une position fixe.

Dans les casques actuels le dispositif de visualisation comporte des moyens de projection de l'image symbolique. La projection est effectuée sur un combineur qui renvoie l'image projetée vers l'oeil du pilote. Le dispositif de projection et de renvoi présente pour un bon confort une image collimatée. Le combineur est une surface partiellement réfléchissante laissant passer les rayons optiques en provenance du paysage extérieur et réfléchissant au moins partiellement l'image en provenance des moyens de projection. Le combineur est en général constitué par une partie d'une visière de protection dont est équipé le casque.

La demande de brevet GB - A - 2 254 160 décrit un casque formé d'une coque et de moyens optroniques fixés sur une visière destinée à être montée de manière amovible sur la coque à l'aide d'ensembles de liaison solidaires d'une part de la coque et d'autre part de la visière.

La bonne position entre eux, et par rapport à l'oeil du pilote, des équipements optroniques de visualisation, est réalisée au cours d'une phase de personnalisation du casque. Cette phase comporte une adaptation de l'habillage du casque garantissant pour le futur porteur du casque une bonne position de l'image symbolique.

Il est connu que la coque du casque, sur laquelle sont fixés les équipements optroniques de visualisation se déforme sous l'action de diverses sollicitations. On peut citer à titre d'exemple, l'écartement des flancs latéraux de la coque, pour permettre le passage des oreilles du pilote lors de la mise en place du casque, leur rapprochement lors du serrage de la jugulaire du casque, ou encore des événements accidentels tels que les chocs, les évolutions sous facteur de charge élevé, le bris de la verrière ou l'éjection.

Toutes les sollicitations de déformation de la coque entraînent des changements de position des composants du système optronique de visualisation.

Ces changements de position sont préjudiciables aux performances des moyens optroniques de visualisation. Pour éviter ces déformations il est connu dans l'art de rigidifier les éléments mécaniques entrant dans la composition de ces moyens. Ainsi les moyens de projection sont maintenant souvent inclus dans des tubes rigides. Il est également connu de réaliser la coque du casque de façon à obtenir une grande rigidité de l'interface entre les éléments mécaniques des moyens de visualisation et la coque du casque, et une certaine souplesse du reste de la coque. Cette souplesse est nécessaire comme il a été vu pour la mise en place du casque. Elle permet également une meilleure résistance aux chocs, la déformation de la coque assurant l'absorption d'une partie de l'énergie du choc.

Malgré les précautions de fabrication, les déformations des parties souples de la coque entraînent des déformations de la partie rigide de la coque qui elles-mêmes sollicitent en déformation les parties mécaniques des moyens optroniques. Ces déformations sont répercutées dans le rapport des rigidités relatives des divers éléments de la chaîne mécanique allant des parties souples de la coque, aux parties rigides de cette coque et des moyens optroniques. La minimisation de ces déformations au niveau des moyens optroniques, tout en gardant au casque des capacités de déformation pour absorber l'énergie des chocs conduit à une augmentation de la masse du casque et de la masse des éléments mécaniques des moyens optroniques. Cette augmentation de masse est elle-même préjudiciable au confort et à la sécurité du pilote. Plus l'équipement de tête est lourd plus l'énergie mise en jeu lors d'un choc est importante.

La présente invention a pour but de permettre les déformations nécessaires du casque, sans alourdir la structure du casque et des éléments mécaniques de l'optronique. Elle a pour but de découpler totalement les fonctions de la coque du casque et d'une partie rigide liée au casque et supportant les moyens optroniques. De la sorte la coque est ramenée à son rôle premier qui est d'assurer une protection au pilote. Elle peut donc être allégée. De même la structure mécanique de support des moyens optroniques n'a plus à résister aux contraintes de déformation dues aux déformations du casque. Elle peut être allégée également. Il en résulte pour le pilote, une plus grande sécurité, un meilleur confort de port dû à l'allégement, et une plus grande facilité pour la mise en place et la dépose du casque. L'invention vise également à faciliter la réalisation de l'équipement de tête équipé.

A toutes ces fins l'invention a pour objet un équipement de tête comportant les caractéristiques de la revendication 1.

Le plan de symétrie du casque est, lorsque le casque est porté, le plan vertical de symétrie du corps humain. Il ne doit pas être entendu que l'invention n'est applicable qu'aux coques présentant une symétrie rigoureuse. La mention du plan de symétrie n'est destinée qu'à localiser par rapport à lui les diverses parties de la coque.

Dans un mode de réalisation les ensembles de liaison sont constitués par des blocs de matière déformable élastiquement, par exemple, un caoutchouc ou un élastomère.

Dans le mode préféré de réalisation les ensembles de liaison sont constitués par des pions sur une pièce, capables de coulisser axialement dans des cylindres, sur l'autre pièce.

Ainsi la déformation longitudinale des blocs élastiques ou le coulissement des pions dans les cylindres autorisent un déplacement relatif local de la coque et de la structure porteuse des équipements optroniques l'ensemble conservant une position relative constante.

De préférence les ensembles de liaison sont placés de façon à permettre les mouvements les plus usuels de la coque et de la structure porteuse. Ainsi selon un mode préféré de réalisation l'équipement comporte un ensemble pion-cylindre dans chacun des flancs latéraux de la coque, un troisième ensemble pion-cylindre ayant son axe situé dans le plan de symétrie de la coque assurant le maintien latéral de l'ensemble coque structure.

Cette disposition permet l'écartement des flancs de la coques lors de la mise en place ou du retrait des casque. Le déplacement latéral des flancs provoque en général un déplacement d'avant en arrière de la partie arrière de la coque et de bas en haut de la partie supérieure de la coque, c'est pourquoi de préférence le troisième ensemble pion-cylindre sera situé au niveau de la partie arrière de la coque ou au niveau de la partie supérieure.

Les mouvements de déformation de la coque, par exemple, pour la mise en place et le retrait du casque, sont des mouvements qui peuvent s'assimiler pour les parties mobiles qui constituent les flancs à des rotations ou à des rotations et translations. C'est pourquoi dans un mode de réalisation, les axes des cylindres ou des blocs élastiques se trouvant dans les parties latérales seront perpendiculaires à l'axe de rotation de ces parties. Dans la mesure où le casque présente une symétrie par rapport à un plan et où les axes sont situés à un même niveau sur une ligne avant arrière de ce plan, les axes des blocs élastiques ou des cylindres latéraux sont de préférence coplanaires et présentent une symétrie par rapport au plan de symétrie de la coque. Cette configuration n'est cependant, même dans ce cas, pas obligatoire. Un même résultat peut être obtenu par le fait que les pions ont une partie, assurant le contact avec le cylindre, en forme de rotule permettant à la fois un coulissement et une rotation du pion. Ceci est obtenu si par exemple la partie du pion au contact de la paroi interne du cylindre à une forme sphérique. La partie joignant la rotule à la pièce liée (la coque ou la structure porteuse) a alors des dimensions latérales (perpendiculaires à l'axe du cylindre) inférieures au diamètre du cylindre de façon à autoriser le débattement.

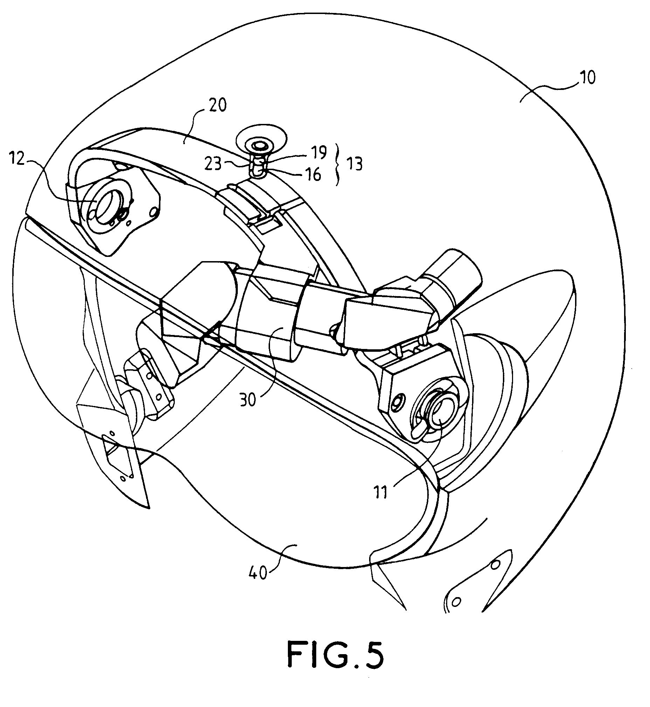

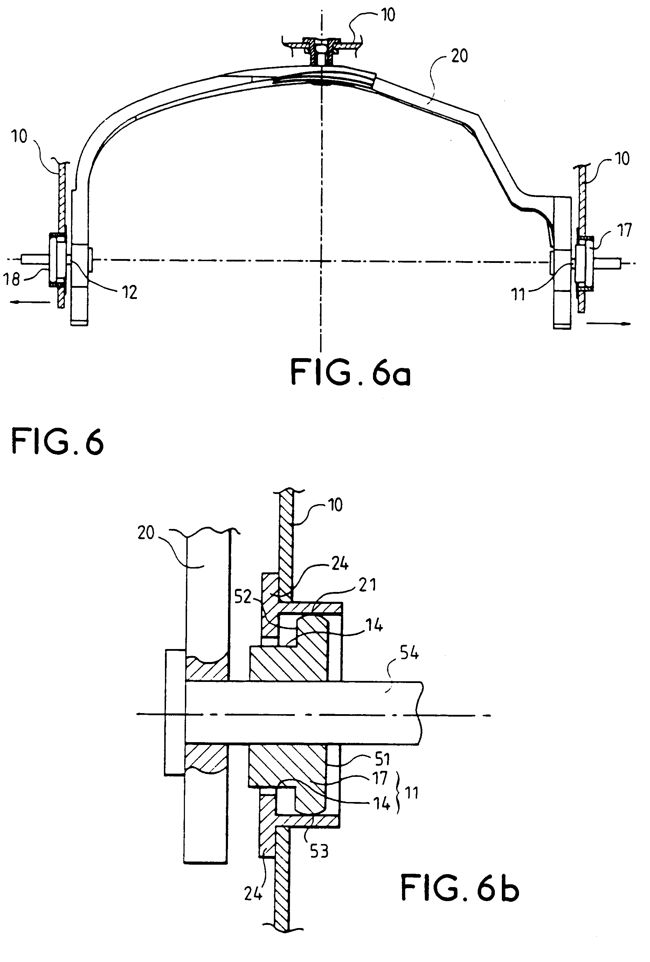

Dans le mode de réalisation préféré qui sera décrit plus loin en référence aux figures 5 et 6, les pions sont sur la structure porteuse et les cylindres sur la coque. La solution inverse pourrait aussi bien convenir ou encore une solution mixte avec des pions et des cylindres sur l'une des pièces, l'autre pièce ayant autant de cylindres que la première a de pions et autant de pions que la première a de cylindres. Enfin sans sortir du cadre de l'invention, il est possible d'utiliser sur un même casque des liaisons pions cylindres et des liaisons avec blocs élastiques.

Le principe de l'invention et de certains de ses modes de réalisation seront maintenant explicités en regard des dessins annexés dans lesquels :
- la figure 1, expose le principe de l'invention ; elle comporte les figures 1a et 1b ;
- la figure 2 qui comporte les figures, 2a, 2b, et 2c est destinée à montrer l'intérêt de modes de réalisation représentés schématiquement figure 3 et 4 ;
- la figure 3 montre un mode de réalisation dans lequel deux cylindres latéraux sont perpendiculaires à un axe de rotation des flancs ;
- la figure 4, qui comporte les figures 4a à 4d, illustre un mode de réalisation avec liaison annulaire ;
- la figure 5, représente une vue en perspective d'un casque réalisé selon un mode préféré de l'invention ;
- la figure 6 qui comporte les figures 6a et 6b représente en coupe une structure porteuse et sa liaison à la coque selon le mode préféré.

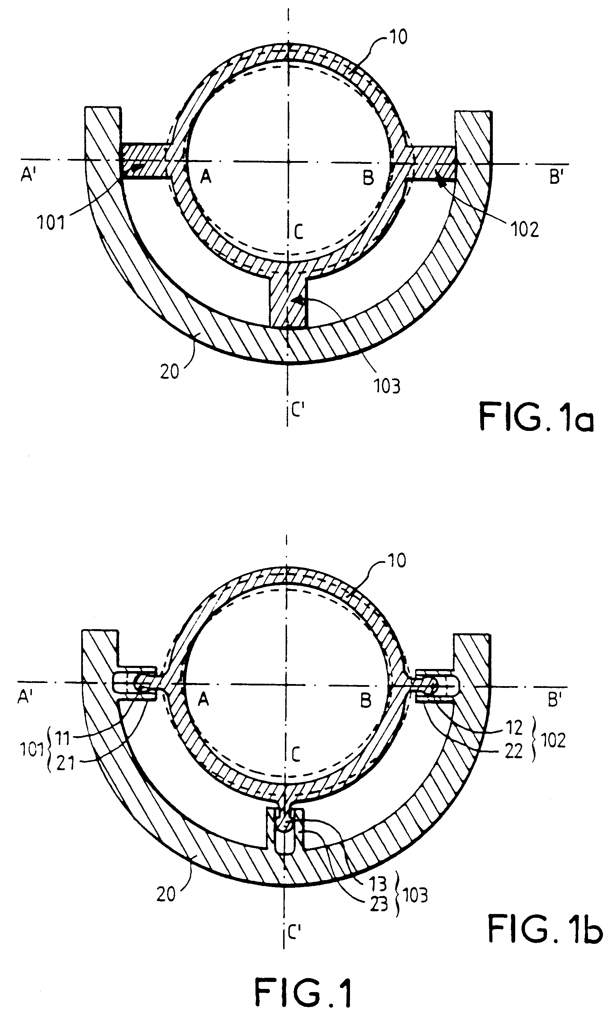

La figure 1, fait apparaître en coupe trois liaisons 101,102,103 entre une coque 10 et une structure porteuse 20. Il s'agit sur cette figure de montrer le principe, aussi les liaisons sont plus importantes en dimensions que dans la réalité. Sur la figure 1a les trois liaisons sont constituées par des blocs élastiques. Sur la figure 1b elles sont composées selon le mode préféré avec trois pions 11, 12, 13 représentés ici sur la coque 10, et trois cylindres correspondants 21, 22, 23 représentés ici sur la structure porteuse 20. La coupe est réalisée suivant un plan horizontal. Les liaisons 101, 102, 103 de la figure 1a et les pions 11, 12, 13 de la figure 1b sont représentés selon deux positions. Une première position représentée en pointillé correspond à la position de la coque 10 déformée par l'action du porteur pour mettre ou ôter le casque. La seconde position en trait pleins correspond à la position au repos du casque. La liaison coque 10 structure porteuse 20 est isostatique. Une déformation de la coque se traduit par une déformation des blocs, ou une translation des pions 11, 12, 13 dans les alésages cylindriques 21, 22, 23.

Dans le mode représenté figure 1, les axes AA', BB' des blocs 101, 102 ou des alésages cylindriques 21, 22 ont été représentés colinéaires, ils pourraient être parallèles et/ou situés dans des plans horizontaux ou frontaux différents. L'axe CC' du bloc 103 ou de l'alésage cylindrique 23 est perpendiculaire aux axes AA' et BB'.

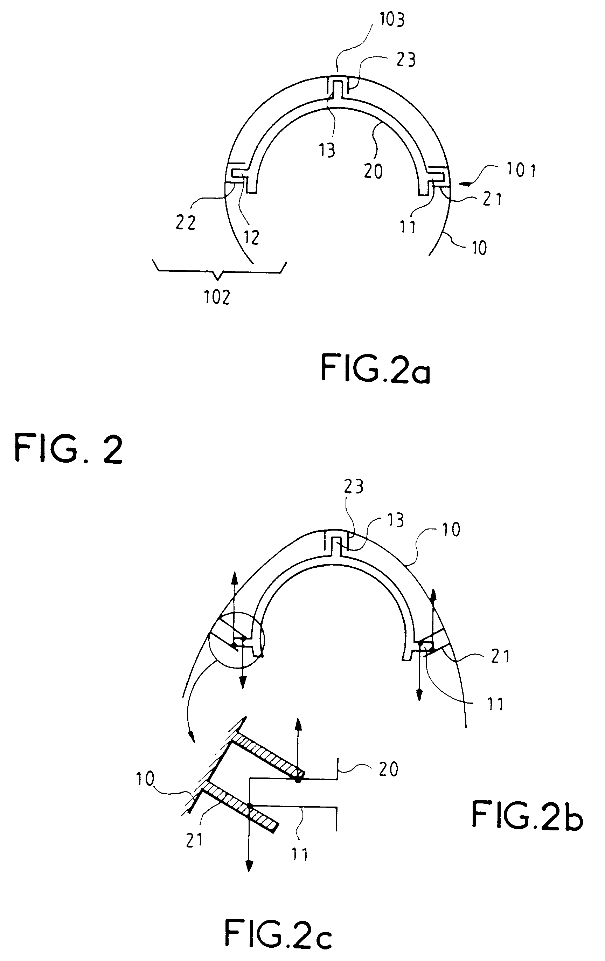

Les figures 2a, 2b et 2c représentent schématiquement une coque 10 munie d'alésages cylindriques 21, 22, 23, recevant des pions 11, 12, 13 d'une structure porteuse 20.

Sur la figure 2a la coque est en position de repos. Sur la figure 2b, les flancs de la coque sont écartés. On voit que dans cette configuration les pions exercent sur la structure porteuse des efforts matérialisés par des flèches. Ces efforts ont tendance à déformer la structure porteuse 20. La nature de ces efforts et leur lieu d'exercice sont représentés sur un détail agrandi figure 2c.

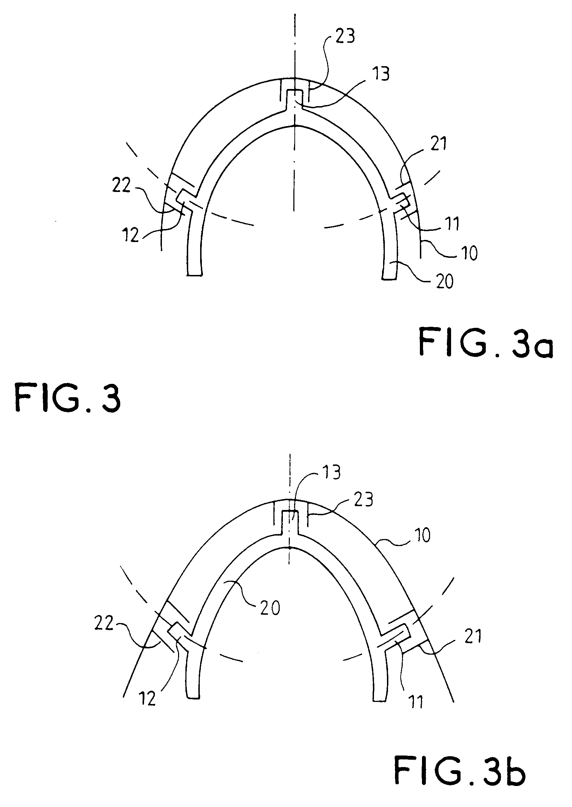

Afin d'éviter cette transmission d'effort il est prévu dans un mode de réalisation d'orienter les cylindres de telle sorte qu'ils soient tangents chacun à un cercle centré sur l'axe de rotation autour duquel se déplace la partie de coque portant le cylindre lors de la mise en place du casque. Cette réalisation est représentée schématiquement figure 3. Sur cette figure comme sur les précédentes et les suivantes les éléments ayant la même fonction portent le même numéro.

Sur la figure 3a les cercles auxquels sont tangents les lignes axiales des cylindres 21, 22 ont été représentés en pointillé.

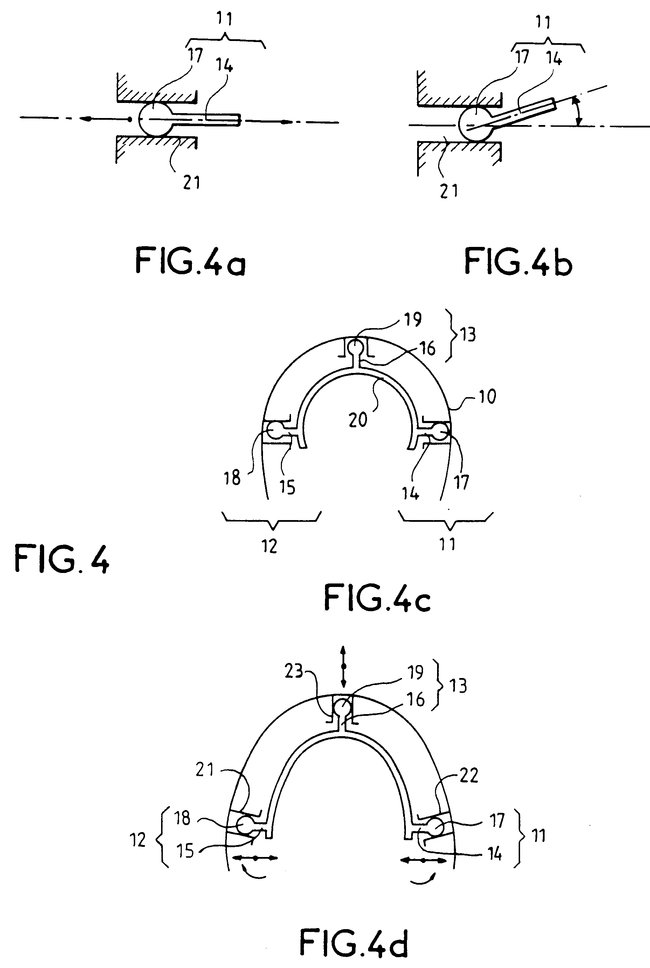

Si les mouvements relatifs sont assez petits, cette solution est satisfaisantes. Dans ce cas les axes des cylindres de flanc 21, 22 pourront être coplanaires et symétriques l'un de l'autre par rapport au plan de symétrie de la coque, l'axe du troisième cylindre étant perpendiculaire à ce plan. Ce mode de réalisation suppose que le porteur du casque déforme son casque pour le mettre ou l'ôter de façon régulière en écartant les flancs toujours de la même façon. L'expérience montre que ce n'est pas toujours le cas. C'est pourquoi dans le mode préféré de réalisation les pions ont comme représenté figure 4a et b pour le pion 11 une forme de rotule 17 emmanchée à l'extrémité d'un bras 14 de diamètre inférieur à celui du cylindre 21. On a de la sorte combinaison d'une liaison à rotule à trois degrés de liberté en rotation et d'une liaison en translation selon l'axe du cylindre 21.

Les figures 4c et 4d représentent une structure porteuse équipée selon l'invention de pions 11, 12, 13, chaque pion comportant un bras 14, 15, 16 de diamètre inférieur à celui du cylindre dans lequel il est destiné à être logé. Chacun des bras est terminé par une rotule 17, 18, 19 dimensionnée pour pourvoir coulisser dans le cylindre 21, 22, 23 dans lequel il est prévu qu'elle s'emboîte.

La figure 4c représente la structure porteuse 20 et la coque 10 assemblées avec un montage isostatique comportant trois pions à rotule.

La figure 4d représente ce même montage alors que la coque 10 est sollicitée en déformation pour la mise en place ou le retrait du casque. Les rotules 17, 18 des flancs permettent la déformation en translation et rotation de la coque 10 sans exercer de contrainte sur la structure porteuse 20. La forme avec rotule du pion supérieur 13 n'est pas indispensable puisque la coque 10 n'est sollicitée au niveau de la calotte supérieure qu'en translation.

Afin de permettre une meilleure compréhension de la façon dont sont intégrées la coque, la structure porteuse et l'équipement optronique il a été représenté figure 5, une vue en perspective d'un équipement de tête incluant un mode préférentiel de réalisation de l'invention et comportant une structure porteuse 20 d'un équipement optronique 30.

La structure porteuse 20 est incluse à l'intérieur d'une coque 10. Trois liaisons mécaniques de même nature 101, 102, 103, deux liaisons de flanc 101 et 102 et une liaison de calotte supérieure 103 assurent l'assemblage de la structure porteuse 20 et de la coque 10. La liaison de calotte 103 a été représentée en transparence afin de faire apparaître un pion 13 comportant un bras 16 dépassant de la structure porteuse 20 et terminé par une partie en forme de sphère 19. La sphère 19 coulisse dans un alésage 23 inclus dans la coque 10. La visière 40 du casque et le dispositif optronique 30 connus en eux-mêmes ne seront pas décrits.

La figure 6a représente une vue en coupe du casque de la figure 5. Le plan de coupe est le plan coplanaire des axes des cylindres et des pions 11, 21, 12, 22, 13, 23.

La figure 6 fait apparaître la structure porteuse 20 et la coque 10. Elle fait apparaître également la forme particulière des rotules 17, 18 des liaisons latérales 101, 11, 21 ; 102, 12, 22, dont l'une est représentée agrandie sur le détail de la figure 6b. La rotule 17 a la forme d'une sphère tronquée par deux plans symétriques 51, 52, d'un plan diamétral de la sphère. Le bras 14 est cylindrique et son axe est perpendiculaire aux plans 51, 52 de tronquage de la sphère. La partie latérale arrondie de la rotule 17 coulisse dans un cylindre 21. Ce dernier est partiellement obturé par une pièce 24 en forme de couronne ayant pour axe l'axe du cylindre 21. Le diamètre interne de la couronne 24 est supérieur au diamètre du bras 14 du pion 11 et inférieur au diamètre du cylindre 21. Ce fait associé à la forme sphérique de la partie latérale de la rotule 17 au contact du cylindre 21 permet la rotation et la translation de la coque 10 autour du pion 11. La butée 24 arrête la déformation de la coque en cas d'éjection.

Au moment de l'éjection la coque à tendance à se gonfler sous l'effet du vent relatif. A ce moment la surface plane 52 de la rotule 17 vient au contact de la butée 24.

La structure porteuse 20 participe alors dans ce cas exceptionnel au maintien de la rigidité de la coque 10.

Les alésages 21-23 et au moins les parties 53 des rotules 17 au contact des alésages sont réalisées en matériaux plastiques à faible coefficient de frottement et résistant à l'usure (par exemple du Téflon).

## Revendications

1. Equipement de tête comportant un casque comportant luimême des moyens optroniques (30), une structure (20) rigide capable de recevoir une partie au moins, des moyens optroniques (30) et une coque (10) présentant un plan de symétrie, des parties situées de part et d'autre du plan de symétrie de la coque constituant les parties latérales ou flancs de la coque, ces parties étant jointes entre elles par une partie arrière de la coque et une partie supérieure de la coque ces deux parties étant traversées par le plan de symétrie équipement de tête, cette structure rigide (20) étant ellemême liée à la coque (10), la coque (10) et la structure rigide (20) comportant des ensembles de liaison (101-103) fixés d'une part à la coque (10) et d'autre part à la structure rigide (20), caractérisé en ce que les ensembles de liaison (101-103) sont déformables ou capables de coulisser de manière à permettre un déplacement relatif local de la coque (10) et de la structure rigide (20), l'ensemble conservant une position relative constante.

2. Equipement selon la revendication 1, caractérisé en ce qu'il comporte trois ensembles de liaison (101-103) dont deux (101-102) situés dans chacune des deux parties latérales de la coque et un troisième (103) au niveau du plan de symétrie du casque.

3. Equipement selon l'une des revendications 1 ou 2, caractérisé en ce que les ensembles de liaison (101-103) sont constitués par des blocs de matière déformable élastiquement.

4. Equipement selon l'une des revendications 1 ou 2, caractérisé en ce que les ensembles de liaison sont constitués par des pions (11, 12, 13) sur une pièce (10, 20) capable de coulisser axialement dans des cylindres (21, 22, 23) sur l'autre pièce (10, 20).

5. Equipement selon la revendication 4, caractérisé en ce que les lignes axiales de deux cylindres (21, 22) sont coplanaires et en ce que la ligne axiale d'un troisième (23) est perpendiculaire au plan déterminé par les deux premières.

6. Equipement selon la revendication 4, caractérisé en ce que les lignes axiales de deux premiers cylindres (21, 22) sont confondues et en ce que la ligne axiale d'un troisième (23) est perpendiculaire à la ligne axiale commune des deux premiers (21, 22).

7. Equipement selon la revendication 4, caractérisé en ce que au moins un pion (11, 12, 13) comporte une partie en forme de rotule (17, 18, 19) autorisant le coulissement et la rotation relative du pion (11, 12, 13) par rapport au cylindre (21, 22, 23).

8. Equipement selon la revendication 7, caractérisé en ce que au moins un pion (11) comporte un bras (14) de dimensions latérales inférieures au diamètre du cylindre (21), ce bras (14) portant la rotule (17).

9. Equipement selon la revendication 8, caractérisé en ce que au moins une rotule (17) a une forme de sphère tronquée par deux plans (51, 52) symétriques d'un plan diamétral de la sphère.

10. Equipement selon la revendication 8, caractérisé en ce que une extrémité du cylindre (21) est obturée par une butée (24) comportant un alésage traversé par le bras (17), le diamètre de l'alésage étant inférieur au diamètre du cylindre (21) et supérieur au diamètre du bras (17).

11. Equipement selon l'une des revendication 4 à 10, caractérisé en ce que au moins les parties en contact des pions (11, 12, 13) et des cylindres (21, 22, 23) sont en plastique.

## Claims

1. Headgear including a helmet itself including optoelectronic means (30), a rigid structure (20) capable of accommodating at least a part of the optoelectronic means (30) and a shell (10) having a plane of symmetry, parts situated on either side of the plane of symmetry of the shell constituting the side parts or flanks of the shell, these parts being joined together by a rear part of the shell and an upper part of the shell, these two parts being traversed by the headgear plane of symmetry, this rigid structure (20) being itself linked to the shell (10), the shell (10) and the rigid structure (20) including linking assemblies (101-103) which are fixed, on the one hand, to the shell (10) and, on the other hand, to the rigid structure (20), characterized in that the linking assemblies (101-103) are deformable or capable of sliding so as to allow local relative movement of the shell (10) and of the rigid structure (20), the assembly maintaining a constant relative position.

2. Headgear according to Claim 1, characterized in that it includes three linking assemblies (101-103), including two (101-102) situated in each of the two side parts of the shell and a third (103) in the region of the plane of symmetry of the helmet.

3. Headgear according to either of Claims 1 and 2, characterized in that the linking assemblies (101-103) consist of blocks of elastically deformable material.

4. Headgear according to either of Claims 1 and 2, characterized in that the linking assemblies consist of pins (11, 12, 13) on one piece (10, 20) capable of sliding axially in cylinders (21, 22, 23) on the other piece (10, 20).

5. Headgear according to Claim 4, characterized in that the axial lines of two cylinders (21, 22) are coplanar and in that the axial line of a third (23) is perpendicular to the plane defined by the first two;

6. Headgear according to Claim 4, characterized in that the axial lines of two first cylinders (21, 22) are in coincidence and in that the axial line of a third (23) is perpendicular to the common axial line of the first two (21, 22).

7. Headgear according to Claim 4, characterized in that at least one pin (11, 12, 13) includes a part in the form of a ball joint (17, 18, 19) allowing relative rotation and sliding of the pin (11, 12, 13) with respect to the cylinder (21, 22, 23).

8. Headgear according to Claim 7, characterized in that at least one pin (11) includes an arm (14) of lateral dimensions less than the diameter of the cylinder (21), this arm (14) carrying the ball joint (17).

9. Headgear according to Claim 8, characterized in that at least one ball joint (17) has the shape of a sphere truncated by two symmetric planes (51, 52) of a diametral plane of the sphere.

10. Headgear according to Claim 8, characterized in that one end of the cylinder (21) is closed off by a stop (24) including a bore traversed by the arm (17), the diameter of the bore being less than the diameter of the cylinder (21) and greater than the diameter of the arm (17).

11. Headgear according to one of Claim [sic] 4 to 10, characterized in that at least the parts of the pins (11, 12, 13) and of the cylinders (21, 22, 23) which are in contact are made of plastic.

## Patentansprüche

1. Auf dem Kopf zu tragende Ausrüstung mit einem Helm, der seinerseits optoelektronische Mittel (30), eine starre Struktur (20), die wenigstens teilweise zur Aufnahme der optoelektronischen Mittel (30) geeignet ist, und eine Schale (10) mit einer Symmetrieebene aufweist, wobei beiderseits der Symmetrieebene liegende Teile der Schale die seitlichen Teile oder Flanken der Schale bilden, wobei diese Teile durch einen hinteren Teil der Schale und einen oberen Teil der Schale miteinander verbunden sind und diese Teile von der Symmetrieebene der auf dem Kopf zu tragenden Ausrüstung durchquert werden, wobei diese starre Struktur (20) ihrerseits mit der Schale (10) verbunden ist, wobei die Schale (10) und die starre Struktur (20) Verbindungseinheiten (101 - 103) aufweisen, die einerseits an der Schale (10) und andererseits an der starren Struktur (20) befestigt sind, dadurch gekennzeichnet, daß die Verbindungseinheiten (101 - 103) verformbar sind oder derart gleiten können, daß eine lokale Relativverschiebung der Schale (10) und der starren Struktur (20) möglich wird, wobei die Einheit eine konstante Relativposition behält.

2. Ausrüstung nach Anspruch 1, dadurch gekennzeichnet, daß sie drei Verbindungseinheiten (101 - 103) aufweist, von denen zwei (101 - 102) in jedem der beiden seitlichen Teile der Schale und eine dritte (103) auf Höhe der Symmetrieebene des Helms liegen.

3. Ausrüstung nach einem der Ansprüche 1 oder 2, dadurch gekennzeichnet, daß die Verbindungseinheiten (101 - 103) durch Blöcke aus einem elastisch verformbaren Material gebildet sind.

4. Ausrüstung nach einem der Ansprüche 1 oder 2, dadurch gekennzeichnet, daß die Verbindungseinheiten durch Zapfen (11, 12, 13) an einem Teil (10, 20) gebildet sind, die axial in Zylindern (21, 22, 23) an dem anderen Teil (10, 20) gleiten können.

5. Ausrüstung nach Anspruch 4, dadurch gekennzeichnet, daß die axialen Linien von zwei Zylindern (21, 22) koplanar sind, und daß die axiale Linie eines dritten (23) senkrecht zu der durch die beiden ersten bestimmten Ebene ist.

6. Ausrüstung nach Anspruch 4, dadurch gekennzeichnet, daß die axialen Linien der beiden ersten Zylinder (21, 22) zusammenfallen, und daß die axiale Linie eines dritten (23) senkrecht zu der gemeinsamen axialen Linie der beiden ersten (21, 22) verläuft.

7. Ausrüstung nach Anspruch 4, dadurch gekennzeichnet, daß wenigstens ein Zapfen (11, 12, 13) einen Teil in Form eines Schwenkkörpers (17, 18, 19) aufweist, der das Gleiten und die Relativdrehung des Zapfens (11, 12, 13) bezüglich des Zylinders (21, 22, 23) zuläßt.

8. Ausrüstung nach Anspruch 7, dadurch gekennzeichnet, daß wenigstens ein Zapfen (11) einen Arm (14) mit seitlichen Abmessungen aufweist, die kleiner als der Durchmesser des Zylinders (21) sind, wobei dieser Arm (14) den Schwenkkörpers (17) trägt.

9. Ausrüstung nach Anspruch 8, dadurch gekennzeichnet, daß wenigstens ein Schwenkkörpers (17) die Form einer Kugel aufweist, die durch zwei zu einer diametralen Ebene der Kugel parallele Ebenen (51, 52) abgeschnitten ist.

10. Ausrüstung nach Anspruch 8, dadurch gekennzeichnet, daß ein Ende des Zylinders (21) durch einen Anschlag (24) mit einer Bohrung verschlossen ist, die von dem Arm (17) durchsetzt wird, wobei der Durchmesser der Bohrung kleiner als der Durchmesser des Zylinders (21) und größer als der Durchmesser des Arms (17) ist.

11. Ausrüstung nach einem der Ansprüche 4 bis 10, dadurch gekennzeichnet, daß wenigstens die in Kontakt mit den Zapfen (11, 12, 13) und den Zylindern (21, 22, 23) stehenden Teile aus Kunststoff bestehen.
